Europäisches Patentamt

European Patent Office

Office européen des brevets

(11) Veröffentlichungsnummer: **0 249 030
B1**

(12) # EUROPÄISCHE PATENTSCHRIFT

(45) Veröffentlichungstag der Patentschrift:
**31.10.90**

(51) Int. Cl.⁵: **B60T 13/14**

(21) Anmeldenummer: **87106628.8**

(22) Anmeldetag: **07.05.87**

(54) **Bremsdrucksteuerventil.**

(30) Priorität: **10.06.86 DE 3619482**

(43) Veröffentlichungstag der Anmeldung:
**16.12.87 Patentblatt 87/51**

(45) Bekanntmachung des Hinweises auf die Patenterteilung:
**31.10.90 Patentblatt 90/44**

(84) Benannte Vertragsstaaten:
**AT DE GB SE**

(56) Entgegenhaltungen:
**DE-A- 2 802 029
DE-B- 2 259 528**

(73) Patentinhaber: **ROBERT BOSCH GMBH, Postfach 50,
D-7000 Stuttgart 1(DE)**

(72) Erfinder: **Kehl, Georg, Taläckerstrasse 61,
D-7000 Stuttgart 40(DE)**
Erfinder: **Schäfer, Ernst-Dieter, Von-Bülow-Strasse 16,
D-7401 Pliezhausen 4(DE)**

## Beschreibung

### Stand der Technik

Die Erfindung geht aus von einem Bremsdrucksteuerventil nach der Gattung des Hauptanspruchs. Durch das SAE-Paper 840 465 ist ein Bremsdrucksteuerventil bekannt, in dem ein Bremsdruckabsenkventil und ein Bremsdruckaufbauventil zusammengefaßt sind. Das Bremsdruckaufbauventil besitzt eine an eine Druckquelle anzuschließende Ventilkammer mit einem innenliegenden Ventilsitz, ein in der Ventilkammer bewegliches und zumindest teilweise kugelig geformtes Ventilglied, einen mit dem Ventilglied gekoppelten Ausgleichkolben und eine Dichtung, die den Ausgleichkolben relativ zu der Ventilkammer abdichtet, sowie eine Schließfeder. Der Ausgleichkolben und das Ventilglied werden mit dem Druck der Druckquelle gegensinnig beaufschlagt, so daß vergleichsweise geringe Kräfte zum Abheben des Ventilglieds vom Ventilsitz ausreichen. Nachteilig ist, daß beim Abheben des Ventilglieds vom Ventilsitz und beim Zurückbewegen des Ventilglieds zu diesem Ventilsitz Reibungskräfte zwischen dem Ausgleichkolben und seiner Dichtung auftreten. Denn diese Reibungskräfte erschweren ein feinfühliges Abheben und Wiederaufsetzen des Ventilglieds und demgemäß ein feinfühliges Dosieren von Bremsdrücken. Ein feinfühliges Dosieren wird zusätzlich noch dadurch erschwert, daß schon kurze Hübe des Ventilglieds große Ventilöffnungsquerschnitte zur Folge haben.

### Vorteile der Erfindung

Die kennzeichnenden Merkmale des Anspruchs 1 haben den Vorteil, daß beim Abheben des Ventilglieds des Bremsdruckaufbauventils von seinem Ventilsitz keine störenden Reibungskräfte am Bremsdruckaufbauventil auftreten.

Durch die in den Unteransprüchen aufgeführten Maßnahmen sind vorteilhafte Weiterbildungen und Verbesserungen des im Hauptanspruch angegebenen Bremsdrucksteuerventils möglich. Die kennzeichnenden Merkmale des Anspruchs 2 haben den Vorteil, daß das Bremsdrucksteuerventil billig herstellbar ist. Die kennzeichnenden Merkmale des Anspruchs 3 haben den Vorteil einer verbesserten Abdichtung. Die kennzeichnenden Merkmale des Anspruchs 4 ermöglichen ein noch feinfühligeres Dosieren von Bremsdrücken. Die kennzeichnenden Merkmale dieses Anspruchs 4 sind aber auch ohne die kennzeichnenden Merkmale der Ansprüche 1 bis 2 verwendbar. Die kennzeichnenden Merkmale der Ansprüche 5 und 6 geben vorteilhafte konstruktive Einzelmerkmale an.

### Zeichnung

Drei Ausführungsbeispiele der Erfindung sind in der Zeichnung dargestellt und in der nachfolgenden Beschreibung näher erläutert. Es zeigen Figur 1 ein erstes Ausführungsbeispiel der Erfindung im Längsschnitt, Figur 2 eine Einzelheit eines zweiten Ausführungsbeispiels der Erfindung im Querschnitt und Figur 3 ein drittes Ausführungsbeispiel der Erfindung.

### Beschreibung der Ausführungsbeispiele

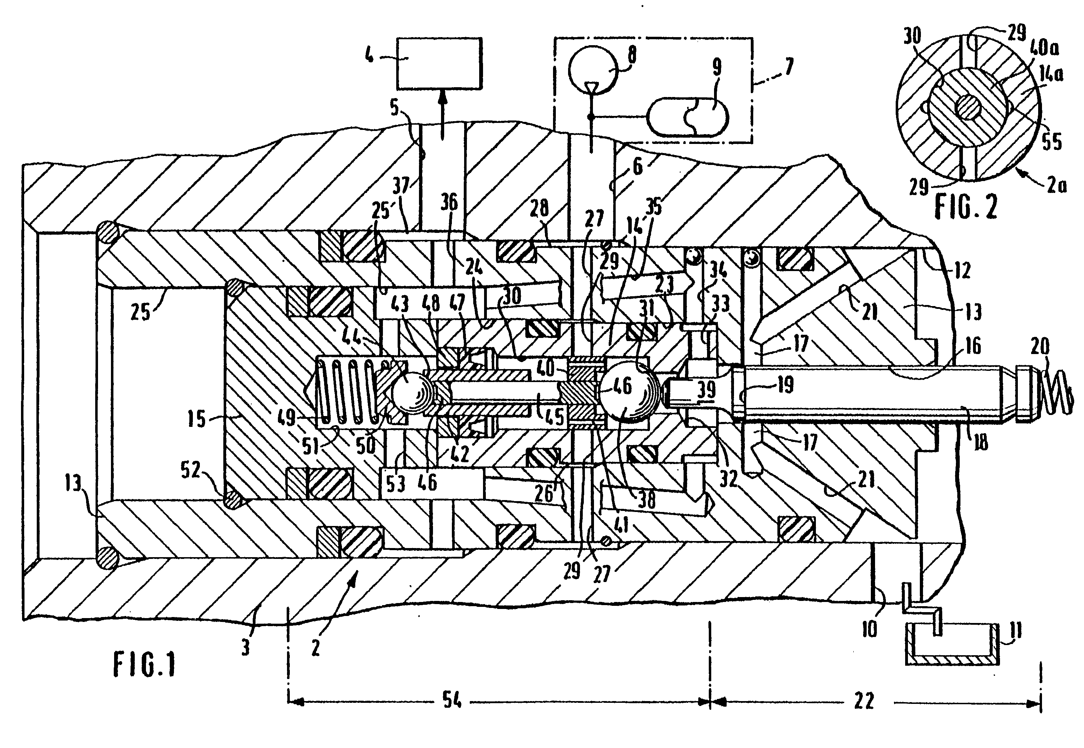

Das Bremsdrucksteuerventil 2 gemäß der Figur 1 ist in einem Gehäuse 3 untergebracht. Das Gehäuse kann beispielsweise auch noch einen nicht dargestellten Bremskraftverstärker aufnehmen und beispielswei se direkt mit wenigstens einer Radbremse 4 verbunden sein. Das Gehäuse 3 hat zu diesem Zweck eine Anschlußbohrung 5. Eine weitere Anschlußbohrung 6 ist mit einer Druckquelle 7 verbunden. Diese Druckquelle 7 kann dem Stand der Technik entnommen werden und enthält zumindest eine Pumpe 8 und einen Druckspeicher 9. Eine weitere Anschlußbohrung 10 ist mit einem Druckmittelvorratsbehälter 11, aus dem sich die Druckquelle 7 versorgt, verbunden.

Das Gehäuse 3 hat eine Stufenbohrung 12, die das Bremsdrucksteuerventil 2 aufnimmt. Das Bremsdrucksteuerventil 2 hat ein erstes buchsenartiges Bauteil 13, das ein zweites buchsenartiges Bauteil 14 und ein drittes Bauteil 15 aufnimmt. An einem Ende hat das buchsenartige Bauteil 13 eine koaxial ausgerichtete zylindrische Bohrung 16 und wenigstens eine quer dazu verlaufende Steuerbohrung 17 und bildet dieserart eine ortsfeste Steuerbuchse. In der Bohrung 16 ist ein Steuerschieber 18 verschiebbar. Der Steuerschieber 18 hat eine Steuerkante 19. Mittels eines nicht dargestellten Bremspedals kann beispielsweise über eine angedeutete Wegsimulatorfeder 20 der Steuerschieber 18 so verschoben werden, daß seine Steuerkante 19 die Steuerbohrungen 17 passiert und dadurch der Steuerschieber 18 diese Steuerbohrungen 17 verschließt. Wird aus der beschriebenen Verschließlage der Steuerschieber 18 in die gezeichnete Ausgangslage zurückbewegt, dann werden die Steuerbohrungen 17 teilweise freigegeben. Dadurch bestehen Verbindungen zwischen der zylindrischen Bohrung 16 und den Steuerbohrungen 17, die ihrerseits über Anschlußkanäle 21 mit der Anschlußbohrung 10 kommunizieren. In der dargestellten Stellung des Steuerschiebers 18 besteht deshalb ein Druckmittelabfluß zum Druckmittelvorratsbehälter 11. Im Bereich der zylindrischen Bohrung 16 bildet deshalb das Bauteil 13 zusammen mit dem Steuerschieber 18 ein Bremsdruckabsenkventil 22.

Anschließend an die zylindrische Bohrung 16 hat das Bauteil 13 eine weitere Bohrung 23 mit größerem Durchmesser, an die sich wiederum Bohrungen 24 und 25 mit jeweils größeren Durchmessern anschließen. Das Bauteil 14 hat zwei äußere Durchmesser, die den Durchmessern der Bohrungen 23 und 24 angepaßt sind. Im Bereich des Übergangs der Durchmesser befindet sich zwischen dem Bauteil 13 und dem Bauteil 14 ein Ringraum 26. Von dem Ringraum 26 gehen radial auswärts Zulaufbohrungen 27 aus, die in einen Ringraum 28 münden, der sich zwischen dem Bauteil 13 und dem Gehäuse 3 befindet. Der Ringraum 28 kommuniziert mit der Anschlußbohrung 6. Von dem Ringraum 26 gehen durch das Bauteil 14 in radialer Richtung einwärts verlaufende weitere Zulaufbohrungen 29 aus. Im Bereich dieser Zulaufbohrungen 29 hat das Bauteil 14 in gleichachsiger Ausrichtung zur zylindrischen Bohrung 16 eine zylindrische Bohrung 30, so daß das Bauteil 14 im Bereich dieser zylindrischen Bohrung 30 eine feststehende Steuerbuchse bildet. In Richtung zur zylindrischen Bohrung 16 hat das Bauteil 14 angrenzend an die zylindrische Bohrung 30 einen ersten Ventilsitz 31 und bildet dieserart eine Ventilkammer. An den Ventilsitz 31 schließt sich eine zu der zylindrischen Bohrung 16 offene Stufenbohrung 32 an. Diese Stufenbohrung 32 steht über wenigstens eine durch das Bauteil 14 verlaufende Radialbohrung 33 sowie über im Bauteil 13 verlaufende Bohrungen 34, 35 mit der Bohrung 25 in Verbindung. Von der Bohrung 25 geht in radialer Richtung wenigstens eine Bohrung 36 aus, die über einen Ringraum 37, der sich zwischen dem Bauteil 13 und dem Gehäuse 3 befindet, mit der Anschlußbohrung 3 kommuniziert. Dem ersten Ventilsitz 31 ist ein erstes Ventilglied 38 zugeordnet. Dieses Ventilglied ist beispielsweise in Form einer Kugel ausgebildet. An den Steuerschieber 18 ist in Richtung der Kugel 38 ein Steuerzapfen 39 angeformt. Die Länge des Steuerzapfens 39 ist so bemessen, daß der Steuerzapfen 39 beim Bewegen des Steuerschiebers 18 in Richtung der Kugel 38 die Steuerbohrung 17 erst dann schließt, wenn Teilräume innerhalb der Bohrung 30, die durch einen Ausgleichkanal 41 verbunden sind, durch geringfügiges Abheben der Kugel 38 von ihrem Ventilsitz 31 hydraulisch entlastet sind. Mit der Kugel 38 ist ein zylindrischer Steuerschieber 40 vereinigt. Dieser Steuerschieber 40 verschließt noch, wenn die Kugel 38 schon ihren Ventilsitz 31 geöffnet hat, die Zulaufbohrungen 29. Vorteilhafterweise sind diese Zulaufbohrungen 29 so zur zylindrischen Bohrung 30 ausgerichtet, daß auf den zylindrischen Steuerschieber 40 im Betrieb praktisch keine störenden Radialkräfte wirken. Im vorliegenden Beispiel wird dies dadurch erreicht, daß die Bohrungen 29 auf einer gemeinsamen Achse liegen, die durch die Längsachse der zylindrischen Bohrung 30 geht. Der Steuerschieber 40 enthält den wenigstens einen Druckausgleichskanal 41. Dadurch stehen, wie erwähnt, beiderseits des Steuerschiebers 40 befindliche Teilräume innerhalb der zylindrischen Bohrung 30 miteinander in Verbindung. Gleichachsig zu dem ersten Ventilsitz 31 ist in einer Entfernung von dem Steuerschieber 40 ein relativ zu diesem beweglicher rohrartiger Ausgleichkolben 42 vorgesehen. Dieser Ausgleichkolben 42 ragt aus dem Bauteil 14 heraus und hat dort einen zweiten Ventilsitz 43. Diesem zweiten Ventilsitz 43 ist ein zweites Ventilglied 44 zugeordnet. Dieses zweite Ventilglied 44 ist beispielsweise wiederum als Kugel ausgebildet und über eine Stange 45, die sich mit einem vorteilhafterweise engen radialem Spiel durch den rohrförmigen Ausgleichkolben 42 hindurch erstreckt, mit dem ersten Ventilglied 38 verbunden. Das Verbinden kann beispielsweise durch elektrisches Stumpfschweißen geschehen. Zum Ausrichten der beiden Kugeln 38 und 44 relative zu der Stange 45 kann die Stange an ihren beiden Enden konzentrische Vertiefungen 46 aufweisen. Der Steuerschieber 40 ist beispielsweise durch Stumpfschweißen an der Kugel 38 befestigt oder kann beispielsweise mittels einer nicht dargestellten Feder gegen die Kugel 38 gedrückt werden.

Aus Gründen einer genauen koaxialen Ausrichtung der beiden Kugeln 38 und 44 sowie des Umfangs des zylindrischen Steuerschiebers 40 kann dessen Umfang nach dem Zusammenschweißen mit den anderen Bauteilen beispielsweise durch Schleifen fertiggestellt werden. In das Bauteil 14 ist ein Dichtring 47 eingebaut, der den Ausgleichkolben 42 abdichtend so umgibt, daß der Ausgleichkolben 42 bei Überwindung von Reibungskräften längsverschiebbar ist. Ein starr angeordneter Ring 48 sichert den Dichtring 47 im Bauteil 14. Eine Schließfeder 49 drückt unter Zwischenschaltung eines Druckstücks 50, das sich selbst zentriert, in Richtung des ersten Ventilsitzes 31 gegen das zweite Ventilglied 44. Die Schließfeder 49 stützt sich in dem Bauteil 15 ab, das zu diesem Zweck eine Sackbohrung 51 hat, die die Schließfeder 49, das Druckstück 50, das zweite Ventilglied 44 und eine Teillänge des Ausgleichkolbens 42 aufnimmt. Das Bauteil 15 stützt sich seinerseits über einen Sicherungsring 52 am Bauteil 13 ab. Von der Sackbohrung 51 gehen Radialbohrungen 53 aus, die in die Bohrung 25 des Bauteils 13 münden und dadurch die Sackbohrung 51 mit der Anschlußbohrung 5 verbinden.

Das Bauteil 14 mit dem ersten Ventilsitz 31, das erste Ventilglied 38, die Stange 45, das zweite Ventilglied 44 und der Ausgleichkolben 42 sowie der zweite Ventilsitz 43 und die Dichtung 47 bilden ein Bremsdruckaufbauventil 54. Durch Hinzufügen des Steuerschiebers 40 ist dieses Bremsdruckaufbauventil 54 als ein schiebergesteuertes Sitzventil ausgebildet, das bekanntlich im geschlossenen Zustand keine Leckage besitzt. Der Druck der Druckquelle 7, der sich durch Zuflußbohrungen 27 und die Zulaufbohrungen 28 und durch unvermeidliche Spalte, die sich zwischen der zylindrischen Bohrung 30 und dem zylindrischen Steuerschieber 40 befinden, allmählich in die Bohrung 30 fortpflanzt, bewirkt durch die im wesentlichen gleich großen Durchmesser des Ventilsitzes 31 und des rohrförmigen Ausgleichkolbens 42 bie geschlossenem Bremsdruckaufbauventil 54 einen weitgehenden axialen Kräfteausgleich an den Ventilgliedern 38 und 44. Der rohrförmige Ausgleichkolben 42 wird dabei in Richtung des außerhalb der zylindrischen Bohrung 30 befindlichen zweiten Ventilgliedes 44 beaufschlagt. Dadurch wird der zweite Ventilsitz 43 vom rohrförmigen Ausgleichkolben 42 abdichtend gegen das zweite Ventilglied 44 gedrückt. Hierbei wird eine Reibkraft des Dichtrings 47 überwunden. Es genügen an sich kleine Kräfte, die mittels des Steuerzapfens 39 auf das erste Ventilglied 38 übertragbar sind, zum Abheben dieses Ventilglieds 38 von seinem Ventilsitz 31. Infolge der Anordnung des den wenigstens einen Druckausgleichkanal 41 aufweisenden Steuerschiebers 40 entsteht, wie bereits angedeutet, immer ein Druckausgleich zwischen einer Teillänge der zylindrischen Bohrung 30 und der anderen Teillänge. Beim Abheben des ersten Ventilgliedes 38 von seinem Ventilsitz 31 wird über die Stange 45 auch das zweite Ventilglied 44 bewegt. Dabei eilt das zweite Ventilglied 44 in Richtung der Schließfeder 49 dem Ausgleichkolben 42, der von der Dichtung 47 gebremst wird, voraus. Diese erfindungsgemäße Ausgestaltung des Bremsdruckaufbauventils hat den Vorteil, daß zum Öffnen des Bremsdruckaufbauventils kleine Kräfte genügen. Dies ist für ein ruckfreies Öffnen der Ventilsitze 31 und 43 von Vorteil, denn Losbrechkräfte, die zum Verschieben des Ausgleichkolbens 42 notwendig sind, stören das Öffnen nicht. Der Querschnitt des rohrförmigen Ausgleichkolbens 42 und das radiale Spiel zwischen diesem und der Stange 45 sind so gewählt, daß bei einer Beaufschlagung mittels Druck aus der Druckquelle ein Druckgefälle zwischen der Bohrung 30 und dem Ventilsitz 43 demzufolge eine Verschiebung des Ausgleichkolbens 42 relativ zu der Dichtung 47 möglich ist. Diese Verschiebung bewirkt später beim Verschließen des Bremsdruckaufbauventils 54 einen sicher abdichtenden Kontakt zwischen dem Ventilglied 44 und seinem Ventilsitz 43. Zusammenfassend kann man den beschriebenen Aufbau des Bremsdruckaufbauventils auch so charakterisieren, daß es sich hierbei um die Schaffung eines kraftausgeglichenen Schieberventils mit Doppelventilsitzabdichtung handelt, bei dem einer der Ventilsitze sich selbst einstellend ausgebildet ist.

Nach dem Abheben des ersten Ventilglieds 38 von seinem Ventilsitz 31 wandert der Steuerschieber 40 so weit in Richtung der Dichtung 47, daß er schließlich die Zulaufbohrungen 29 allmählich freigibt. Hierbei wirkt das Bremsdruckaufbauventil 54 als ein druckausgeglichenes Schieberventil, mittels dem bekanntlich unter Aufwand von nur wenig Steuerkräften Druckmittelströme feinfühlig steuerbar sind. Ergänzend wird noch erwähnt, daß die dargestellte Kombination aus dem ersten Ventilglied 38 und seinem Ventilsitz 31 und dem zylindrischen Steuerschieber 40 mit der zugeordneten zylindrischen Bohrung 30 und den Zulaufbohrungen 29 nicht an die Verwendung des beschriebenen rohrförmigen Ausgleichkolbens 42 und des ihm zugeordneten zweiten Ventilglieds 44 sowie des zweiten Ventilsitzes 43 gebunden ist.

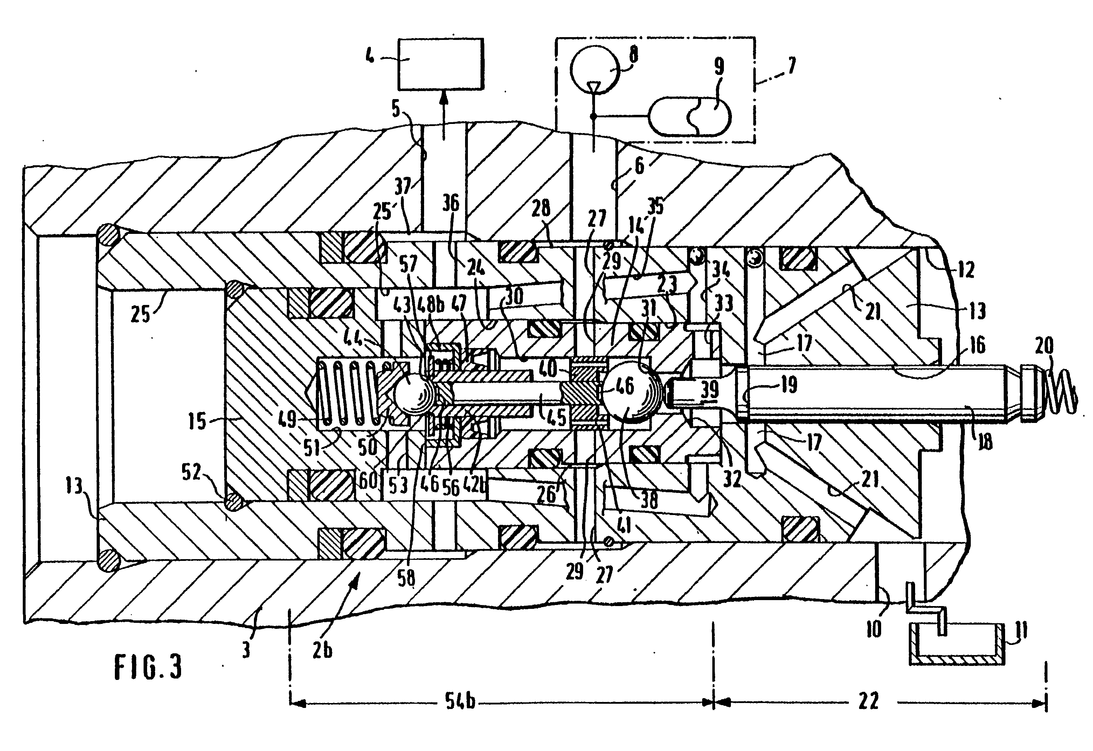

In der Figur 2, die einen Ausschnitt aus einem Ausführungsbeispiel 2a zeigt, ist ein Bauteil 14a dargestellt, das sich von dem Bauteil 14 gemäß der Figur 1 dadurch unterscheidet, daß von seiner zylindrischen Bohrung 30 Längsnuten 55 ausgehen. Diese Längsnuten 55 ersetzen die Druckausgleichkanäle 41 des Steuerschiebers 40. Infolgedessen ist im Ausführungsbeispiel 2a gemäß der Figur 2 ein Steuerschieber 40a verwendbar, der keinerlei Durchbrüche hat. Weiter Möglichkeiten des Druckausgleichs zwischen beiden Seiten des Steuerschiebers 40a bestehen darin, daß man durch das Bauteil 14 hindurch verlaufende nicht dargestellte Kanäle anordnet.

Das Ausführungsbeispiel 2b gemäß der Figur 3 unterscheidet sich von dem zuerst beschriebenen dadurch, daß der Ausgleichkolben 42b nahe bei seinem Ventilsitz 43 mit einem Bund 57 versehen ist, und daß zwischen den Bund 57 und den Dichtring 47 eine Feder 56 oder ein anderes elastisches Element eingebaut ist. Die Feder 56 wirkt gegen den Bund 57 und stützt sich dabei ab an einem Ring 48b, der den Dichtring 47 in axialer Richtung fixiert. Bei geschlossenem Bremsdruckaufbauventil 54b hat der Bund 57 einen axialen Abstand von einer Stirnfläche 58 des Bauteils 13, das beim Öffnen des Bremsdruck aufbauventils 54b einen Anschlag für den Bund 57 bildet. Nach dem Öffnen des Bremsdruckaufbauventils 54b verschiebt diese Feder 56 den Ausgleichkolben 42 und den Ventilsitz 43 ein kurzes Wegstück in Richtung des Ventilglieds 44. Dadurch trifft beim Schließen des Bremsdruckaufbauventils 54b das Ventilglied 44 auf seinen Ventilsitz 43 noch bevor das Ventilglied 38 seinen Ventilsitz 31 berührt, mit dem Vorteil, daß in zuverlässiger Weise ein dichtes Schließen des Bremsdruckaufbauventils 54b zustande kommt.

Der Bund 57 kann an den Ausgleichkolben 42b angeformt sein, oder wie in der Figur 3 angedeutet, aus einer Platte bestehen, die nach Art eines elastisch aufweitbaren Sicherungsringes ausgebildet ist und in eine in den Ausgleichkolben 42b eingearbeitete Umfangsnut 60 eintaucht.

Wie bereits in der Einleitung aufgeführt, schafft die Verwendung von Kugeln als Ventilglieder 38 und 44 billige Herstellungsmöglichkeiten für das Bremsdruckaufbauventil 54. Selbstverständlich können diese Ventilglieder auch durch anders geformte Ventilglieder ersetzt werden. So können beispeilsweise das erste Ventilglied 38, der Steuerschieber 40 und die Stange 45 als ein einstückiges Teil hergestellt werden. Es wäre dann lediglich nach dem Aufstecken des Ausgleichkolben 42 das zweite Ventilglied 44 an der Stange 45 zu befestigen.

**Patentansprüche**

1. Bremsdrucksteuerventil (2) mit einem an eine Druckquelle (7) anzuschließenden Bremsdruckaufbauventil (54, 54b), wobei das Bremsdruckaufbauventil (54, 54b) eine Ventilkammer (14, 30)) mit einem innenliegenden Ventilsitz (31), ein innerhalb der Ventilkammer (14, 30) gegen den Ventilsitz (31) bewegliches Ventilglied (38), einen dem Ventilglied (38) zugeordneten Ausgleichkolben (42, 42b), einen sich an die Ventilkammer (14, 30) anschließenden Dichtring (47), der den Ausgleichkolben (42, 42b) abdichtend umgibt, und eine Schließfeder (49) hat, dadurch gekennzeichnet, daß der Ausgleichkolben (42, 42b) rohrförmig ausgebildet ist und an seinem aus der Ventilkammer (14, 30) herausragenden Ende als ein zweiter Ventilsitz (43) ausgebildet ist, und daß gegen diesen zweiten Ventilsitz (43) ein zweites Ventilglied (44) gerichtet ist, das über eine durch den rohrförmigen Ausgleichkolben (42, 42b) hindurchgeführte Stange (45) mit dem ersten Ventilglied (38) verbunden ist.

2. Bremsdrucksteuerventil nach Anspruch 1, dadurch gekennzeichnet, daß das erste und das zweite Ventilglied (38, 44) als Kugeln ausgebildet sind, die an der Stange (45) befestigt sind.

3. Bremsdrucksteuerventil nach Anspruch 1 oder 2, dadurch gekennzeichnet, daß an dem Ausgleichkolben (42b), der relativ zum Dichtring (47) verschiebbar ist, eine Feder (58) angreift, die den Ausgleichkolben (42b) um ein vorbestimmtes Wegstück relativ zum Dichtring (47) in Richtung des zweiten Ventilgliedes (44) verschieben kann.

4. Bremsdrucksteuerventil, insbesondere nach einem der Ansprüche 1 bis 3, dadurch gekennzeichnet, daß zwischen dem Ausgleichkolben (42) und dem relativ zu diesem beweglichen ersten Ventilglied (38) ein mit diesem verbundener Steuerschieber (40, 40a) angeordnet ist, und daß die Ventilkammer im Bereich dieses Steuerschiebers (40, 40a) eine diesen umgebende zylindrische Bohrung (30) hat und dieserart eine ortsfeste Steuerventilbuchse bildet, wobei der Steuerschieber (40, 40a) und die Steuerventilbuchse, die Zulaufbohrungen (29) hat, ein Steuerventil bilden, das nach dem Abheben des ersten Ventilglieds (38) von seinem Ventilsitz (31) öffenbar ist, und daß wenigstens ein Druckausgleichkanal (41, 55) vorgesehen ist, der Druckausgleich zwischen den beiden Seiten des Steuerschiebers (40, 40a) bewirkt.

5. Bremsdrucksteuerventil nach Anspruch 4, dadurch gekennzeichnet, daß der wenigstens eine Druckausgleichkanal (41) von einer den Steuerschieber (40) durchziehenden Bohrung oder anderen Öffnungen gebildet wird.

6. Bremsdrucksteuerventil nach Anspruch 4, dadurch gekennzeichnet, daß der wenigstens eine Druckausgleichkanal (55) von einer in die zylindrische Bohrung (30) eingearbeiteten Längsnut (55) gebildet wird.

## Claims

1. Brake pressure control valve (2) having a brake pressure build-up valve (54, 54b) to be connected to a pressure source (7), the brake pressure build-up valve (54, 54b) having a valve chamber (14, 30) with an inner valve seat (31), a valve member (38) movable within the valve chamber (14, 30) against the valve seat (31), a compensating piston (42, 42b) allocated to the valve member (38), a sealing ring (47) which adjoins the valve chamber (14, 30) and sealingly surrounds the compensating piston (42, 42b), and a closing spring (49), characterized in that the compensating piston (42, 42b) is of tubular design and, at its end protruding from the valve chamber (14, 30), is designed as a second valve seat (43), and in that a second valve member (44), which is connected to the first valve member (38) via a rod (45) passed through the tubular compensating piston (42, 42b), is directed towards this second valve seat (43).

2. Brake pressure control valve according to Claim 1, characterized in that the first and the second valve member (38, 44) are designed as balls, which are secured on the rod (45).

3. Brake pressure control valve according to Claim 1 or 2, characterized in that a spring (58), which can displace the compensating piston (42b) by a predetermined path length relative to the sealing ring (47) in the direction of the second valve mar (44), engages on the compensating piston (42b), which is displaceable relative to the sealing ring (47).

4. Brake pressure control valve, in particular according to one of Claims 1 to 3, characterized in that arranged between the compensating piston (42) and the first valve member (38) movable relative to the latter is a control slide (40, 40a) connected to the latter, and in that, in the region of this control slide (40, 40a), the valve chamber has a cylindrical bore (30) surrounding said control slide and in this way forms a fixed control valve bush, the control slide (40, 40a) and the control valve bush, which has feed bores (29), forming a control valve which is openable after the lifting of the first valve member (38) from its valve seat (31), and in that at least one pressure compensating channel (41, 55) is provided which brings about pressure compensation between the two sides of the control slide (40, 40a).

5. Brake pressure control valve according to Claim 4, characterized in that the pressure compensating channel (41), of which there is at least one, is formed by a bore or other openings passing through the control slide (40).

6. Brake pressure control valve according to Claim 4, characterized in that the pressure compensating channel (55), of which there is at least one, is formed by a longitudinal groove (55) machined into the cylindrical bore (30).

## Revendications

1. Valve de commande de pression de freinage (2) comprenant une valve de constitution de pression de freinage (54, 54b) qui se raccorde à une source de pression (7), sur laquelle la valve de constitution de freinage (54, 54b) comporte une chambre de valve (14, 30) avec un siège de valve (31) situé à l'intérieur, un élément de valve (38) mobile vers le siège de valve (31) à l'intérieur de la chambre de valve (14, 30), un piston d'équilibrage (42, 42b) adjoint à l'élément de valve (38), une baque d'étanchéité (47) se raccordant à la chambre de valve (14, 30), qui entoure hermétiquement le piston d'équilibrage (42, 42b), caractérisée en ce que le piston d'équilibrage (42, 42b) est constitué en forme de tube et est réalisé à son extrémité faisant saillie hors de la chambre de valve (14, 30) par un deuxième siège de valve, et en ce qu'un deuxième élément de valve (44) est dirigé vers ce deuxième siège de valve (43), lequel élément de valve est relié au premier élément de valve (38) par une tige (45) traversant le piston d'équilibrage (42, 46) en forme de tube.

2. Valve de commande de pression de freinage selon la revendication 1, caractérisée en ce que le premier et le deuxième élément de valve (38, 44) sont constitués par des billes qui sont fixées sur la tige (45).

3. Valve de commande de pression de freinage selon la revendication 1 ou 2, caractérisée en ce qu'un ressort (58) attaque le piston d'équilibrage (42b), qui est mobile par rapport à la bague d'étanchéité (47), lequel ressort peut déplacer le piston d'équilibrage (42b) d'une distance prédéterminée par rapport à la bague d'étanchéité (47) en direction du deuxième élément de valve (44).

4. Valve de commande de pression de freinage, notamment d'après l'une des revendications 1 à 3, caractérisée en ce qu'est disposé entre le piston d'équilibrage (42) et le premier élément de valve (38) déplaçable par rapport à celui-ci, un tiroir de commande (40, 40a) relié à cet élément et en ce que la chambre de valve présente dans la région de ce tiroir de commande (40, 40a) un alésage (30) cylindrique entourant celui-ci et constitue de cette manière, un manchon de valve de commande fixe, en ce que le tiroir de commande (40, 40a) et le manchon de valve de commande, qui comporte les perçages d'arrivée (29), constituent une valve de commande, qui peut s'ouvrir après le soulèvement du premier élément de valve de son siège, et en ce qu'il est prévu au moins un canal de compensation de pression (41, 55), qui assure une compensation de pression entre les deux faces du tiroir de commande (40, 40a).

5. Valve de commande de pression de freinage selon la revendication 4, caractérisée en ce qu'il est constitué au moins un canal de compensation de pression (41) par un perçage traversant le tiroir de commande (40) ou par d'autres ouvertures.

6. Valve de commande de pression de freinage selon la revendication 4, caractérisée en ce qu'il est constitué au moins un canal de compensation de pression par une rainure longitudinale (55) aménagée dans l'alésage cylindrique (30).

FIG.1

FIG. 2

EP 0 249 030 B1

FIG.3

EP 0 249 030 B1